# EUROPEAN PATENT APPLICATION

(11) **EP 1 100 216 A2**
(43) Date of publication of application: **16.05.2001**
(21) Application number: 00309708.6
(22) Date of filing: 02.11.2000
(51) Int. Cl.: H04B 10/10

(54) **Recovering data encoded in infrared signals**

(30) Priority: 09.11.1999 US 438130
(71) Applicant: MKNet Corporation, San Jose, California 95131 (US)
(72) Inventor: Mak, Chit-Ah, Fremont, California 94539 (US); Mak, Richard Yiu-Chung, Cupertino, California 95014 (US)
(74) Representative: Charig, Raymond Julian

(57) **Abstract**

A receiver particularly suited for recovery of information in infra-red signals. The receiver contains a pair of photodiodes biased using voltages having opposite polarities. The outputs of the photodiodes are amplified and subtracted. The subtraction enables any undesired noise common to the both the amplified signals to be reduced. In addition, as the photodiodes are biased using voltages of opposite polarities, the subtraction results in the addition of the magnitudes of the two amplified signals. As a result, a high overall gain may be attained while reducing noise.

## Description

### Background of the Invention

### Field of the Invention

The present invention relates to wireless communications, and more specifically to a method and apparatus for recovering data encoded in infrared signals.

### Related Art

Wireless technology is often employed to transmit information in the form of light and/or radio frequency waves from a transmitter to a receiver. In particular, infrared signals are often used for unobstructed line-of-sight transmissions over short distances as is well-known in the relevant arts. Infrared signals based communication systems are often used in homes and businesses to transfer data between computers, cameras, portable devices, etc.

In a typical environment based on infrared signals, a transmitter employs a light emitting diode (LED) to transmit information (often digital data) encoded infrared signals. A receiver contains one or more light-sensitive devices such as photo-diodes and/or transistor photo-detectors, which generate a signal responsive to the incidence of the infrared signals. The information contained in the infrared signals is recovered based on examination of the signals generated by the light sensitive devices.

One common requirement in the recovery of the information in the infra-red signals is that the signals generated by the light sensitive devices need to be amplified. As the signals generated by light sensitive devices are often feeble (e.g., in the range of 10µA to 100µA), substantial amplification is typically required. In addition, the strength of a received signal is typically inversely proportional to the distance between the transmitter and the receiver. Accordingly, greater amplification may be desirable at least so that a receiver can operate from a correspondingly more distance.

One approach to increasing the amplification is to increase the load resistance associated with operational amplifiers. However, increasing the load resistance may make the amplifiers unsuitable for high speed applications. For example, an infra-red based communication system may need to receive data at a frequency of 10 to 100 megahertz, and increasing the load resistance substantially may make the system slow (i.e., not sufficiently responsive to the high speed data). The inability to operate at high frequencies may not be acceptable in some applications.

Another typical problem present in many implementations is noise, which can be introduced from several sources (e.g., external radio frequency noise, power supply and substrate used to implement the circuits). Noise is particularly problematic because of the low strength of the signals prior to amplification, and the signal changes introduced by noise can significantly impact the signal levels of the amplified signals. The changes in signal levels (introduced by noise) of the amplified signal can lead to erroneous results in the recovery of the information, and is therefore undesirable.

Therefore, what is needed is a method and apparatus which enables accurate and cost-effective recovery of the information encoded in infrared signals.

### Summary of the Invention

The present invention provides an improved receiver suitable for recovering data encoded at high frequencies in infrared signals. In an embodiment of a receiver implemented in accordance with the present invention, a pair of light sensitive devices (e.g., photodiodes) are biased with voltages of opposite polarity. Each of the light sensitive devices generates an electrical signal proportionate to the strength of incident (on the light sensitive device) infrared signals.

A pair of amplifiers may be employed, with each amplifier amplifying a corresponding one of the electrical signals to generate a corresponding amplified signal. A difference circuit (e.g., as a post amplifier) is used to generate a difference signal by subtracting one of the amplified signals from the other. Once the noise is eliminated and substantial amplification is attained, the resulting signal can be examined to recover the data encoded in the analog signals.

Due to the subtraction in generating the difference signals, any common noise present in the amplified signals is eliminated or substantially reduced.

In addition, due to the biasing of the light-sensitive devices in opposite direction, the subtraction results in the addition of the magnitudes of the strengths of the two amplified signals. As a result, the two pre-amplification stages double the received signal strength without sacrificing the circuit's frequency response (i.e., without requiring high load resistances in the amplifiers). Accordingly, the embodiments in accordance with the present invention are particularly suited in applications in which data is encoded at a high frequency.

Therefore, the present invention provides accurate recovery of data encoded in the transmission of high speed infrared signals by doubling the signal strength and rejecting more sources of undesired noise.

The present invention is particularly suited in applications in which data is encoded at high frequencies as the amplifiers with lower load resistance can be used while attaining substantial amplification.

The present invention is particularly suited in applications in which data is encoded at high frequencies also because a receiver is more sensitive to the input infrared signals and the sensitivity allows photodiodes of lower capacitance (usually occupying less space) to be used.

The present invention allows a receiver to be situated at a greater distance from a transmitter as a received signal can be amplified in accordance with the present invention.

Further features and advantages of the invention, as well as the structure and operation of various embodiments of the invention, are described in detail below with reference to the accompanying drawings. In the drawings, like reference numbers generally indicate identical, functionally similar, and/or structurally similar elements. The drawing in which an element first appears is indicated by the leftmost digit(s) in the corresponding reference number.

### Brief Description of the Drawings

The present invention will be described with reference to the accompanying drawings, wherein:.
Figure 1 is a block diagram illustrating an example environment in which the present invention can be implemented;
Figure 2 is a flow-chart illustrating a method in accordance with the present invention;
Figure 3A is a block diagram illustrating a receiver in accordance with the present invention; and
Figure 3B is a block diagram illustrating an alternative embodiment of a receiver in accordance with the present invention.

### Detailed Description of the Preferred Embodiments

### 1. Overview and Discussion of the Invention

The present invention is described in the context of recovering the information encoded at high bit rates in a wireless transmission signal. A pair of light-sensitive devices, one biased with positive voltage and another with negative voltage may be employed to generate respective output signals. The output signals are amplified and subtracted (i.e., difference signal generated).

The subtraction enables common-mode rejection of any undesirable noise. In addition, the subtraction of the signals generated by light-sensitive devices biased in opposite directions leads to increased amplification. As a result, the present invention enables substantial amplification of the desired signals without sacrificing high speed performance while eliminating (or substantially reducing) undesirable noise.

The present invention is described below in further detail with reference to several examples for illustration. It should be understood that the present invention may be employed in several other environments as will be apparent to one skilled in the relevant arts based on the disclosure herein. The implementations in such other environments are contemplated to be within the scope and spirit of the present invention.

### 2. Example Environment

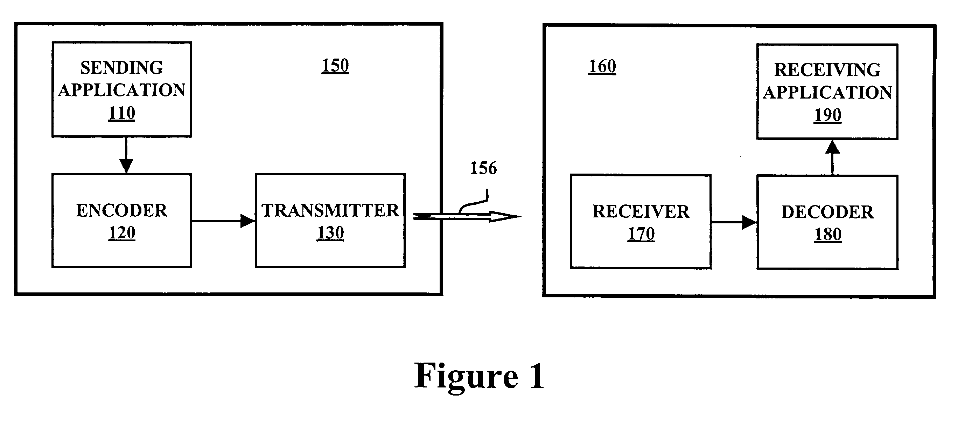

Figure 1 is a block diagram illustrating an example environment in which the present invention can be implemented. There are shown transmitting system 150 and receiving system 160 communicating in a wireless environment. Transmitting system 150 may contain sending application 110, encoder 120, and transmitter 130. Receiver system 160 may contain receiver 170, decoder 180, and receiving application 190. As described below in further detail, receiver 170 implemented in receiving system 160 enables accurate recovery of the data encoded in infrared signal received on path 156.

Even though one system is shown as transmitting and another receiving in Figure 1, in reality most systems are used with two way communication. For conciseness and clarity, data transmission the components related to transmission in only one direction are shown. Thus, a receiver in accordance with the present invention may be implemented in both system 150 and 160. The components of each system shown in Figure 1 are described below in further detail.

Continuing with the description of transmitting system 150 and receiving system 190, sending application 110 corresponds to any application which generates data to be transmitted to an external system (system 160 in this case). The implementation of sending application depends on the specific environment. Examples of such environment include computers, televisions, stereo equipment, cameras, electronics books, etc. Receiving application 190 receives the data from sending application 110, and uses the received data. Receiving application 190 can also be implemented in several environments.

Encoder 120 receives the data to be transmitted from sending application 110. Encoder 120 encodes the data into symbols, with each symbol typically containing a pre-specified number of bits. Encoder 120 forwards the symbols to transmitter 130 at a high rate. In one embodiment, each symbol contains a single bit, and can thus be in one of two states. Encoder 120 can be implemented in a known way.

Transmitter 130 generates infrared signals with the symbols encoded therein. In one embodiment, transmitter 130 contains one or more LEDs, which are modulated according to the values in each received symbol. The symbols are typically sent over a serial communication channel at a high bit rate (e.g., 16 Mbps) using infra-red signals. Transmitter 130 may be implemented in a known way.

Receiver 170 receives the infrared signal, and recovers the symbols in accordance with the present invention as described below in further detail. Decoder 180 receives the recovered symbols, decodes the data contained in the symbols, and forwards the data to receiving application 190. Receiving application 190 may provide several useful features to users depending on the specific environment. The manner in which receiver 170 may be implemented is described below in further detail.

### 3. Method

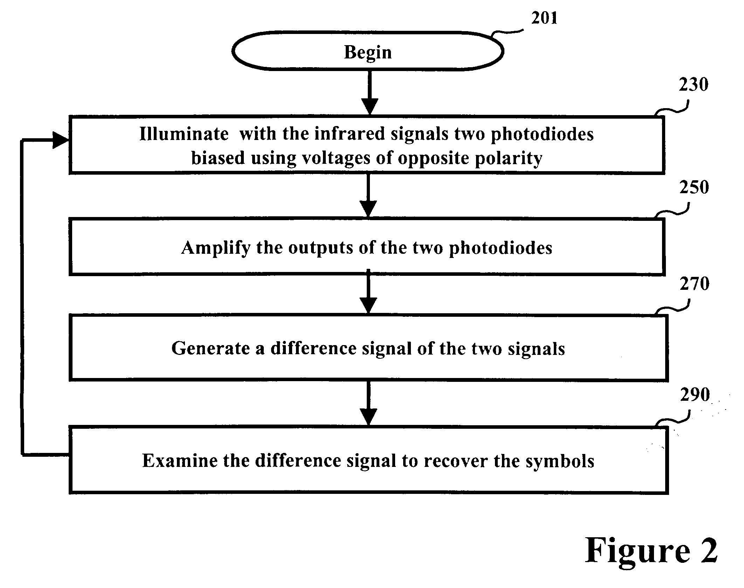

Figure 2 is a flow-chart illustrating a method in accordance with the present invention. The flowchart is described with reference to Figure 1 for illustration. In step 230, two photodiodes (examples of light sensitive devices), biased with voltages having opposite polarities, are illuminated with infrared signals containing symbols. The diodes are generally illuminated if there is no obstruction in the line-of-sight to transmitter 130.

In step 250, the output of the two diodes are amplified. The amplification can be performed in one of several ways. In step 270, a difference signal of the two amplified signals is generated by subtracting one output from the other. By performing the subtraction, any undesirable noise components may be eliminated. In addition, as the output of one diode has positive voltage and the output of the other diode has negative voltage, the voltage level of the difference signal is equal to the sum of the absolute values of the two voltages. Thus, the gains attained in step 250 are accumulated while common noise is eliminated.

In step 290, the difference signal may be examined to determine the value of the symbol encoded in the infra-red signals illuminating the diodes in step 230. The examination may be performed in a known way. Steps 230 - 290 may be repeated to recover each symbol in accordance with the present invention. An example embodiment for implementing the present invention is described next.

### 4. Receiver

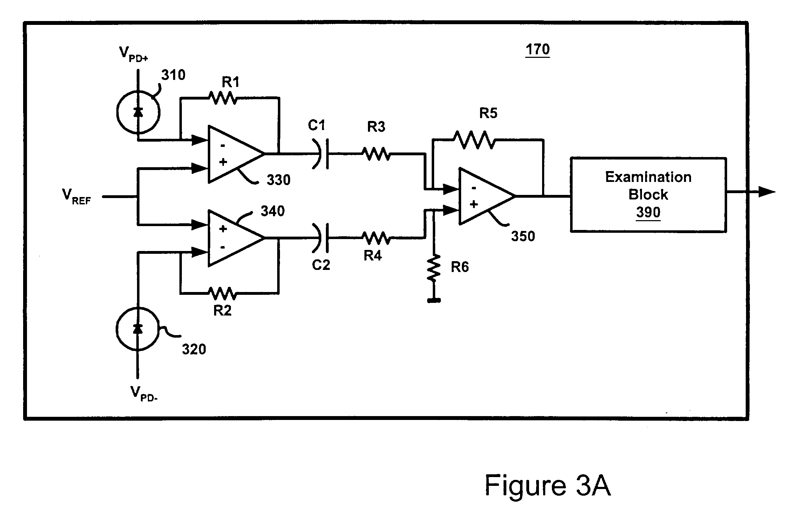

Figure 3A is a block diagram of an embodiment of receiver 170. Receiver 170 may contain photodiodes 310 and 320, amplifiers 330, 340 and 350, capacitors C1 and C2, resistors R1 - R6, and examination block 390. Amplifiers 330 and 340 are referred to as pre-amplifiers and amplifier 350 is referred to as a post-amplifier. Each of the components of receiver 170 is described in further detail below.

Photodiodes 310 and 320 are shown biased using voltages using voltages of opposite polarities, V_{PD+} and V_{PD-} respectively. Each of the two photodiodes 310 and 320 generates electrical current proportional to the illumination level (strength) of the infrared signals incident on corresponding photodiode. However, the currents are generated in opposite directions (polarities) due to the different voltage polarities. One of several commercially available components can be used for photodiodes 310 and 320.

Pre-amplifier 330 receives V_{REF} signal on the positive (+) input terminal and the output of photodiode 310 on the negative (-) input terminal, and amplifies the output signal of photodiode 310. As is well known in the relevant arts, the gain of pre-amplifier 350 is approximately equal to (resistance of component R1)/R_{PD}, wherein R_{PD} is the equivalent reverse biased resistance of the photodiode 310. It may be noted that the voltage level of the output of pre-amplifier 330 is proportionate to the current generated by photodiode 310, and thus to the illumination strength of the incident infrared signals.

In one embodiment, R1 is implemented to have a resistance of about 10 kilo-Ohms, V_{ref} has a voltage of 2.5 Volts (1/2 of the voltage of power supply, not shown), and V_{PD} has a voltage in the range of 5 to 30 volts. The operation of pre-amplifier 340 is described similar to that of pre-amplifier 330, except that pre-amplifier 340 is coupled to the output of photodiode 320 and has resistance R2 coupled in parallel as a load resistor.

Post-amplifier 350 amplifies the voltage difference at the two input terminals. For example, assuming that at a given instant in time the output of pre-amplifier 330 is at X volts and the output of pre-amplifier 340 is at -Y volts (negative due to the reverse bias), the output of post-amplifier may equal ( G x (X + Y)), wherein G is the gain of the post-amplifier.

Thus, due to the biasing in opposite directions, the magnitudes of the gains attained by the two amplifiers 330 and 340 are added. As a result, the load resistances R1 and R2 can be implemented to be low for a desired gain at the output of post-amplifier 350. Accordingly, a receiver implemented in accordance with the present invention is particularly suited for environments in which the symbols are encoded at a high rate.

In addition, due to the subtraction operation by post-amplifier 350, any common noise in the two input signals may be eliminated. Such noise may be introduced from several sources such as power supplies (not shown) usually supplied to amplifiers 330 and 340, from substrate on which the receiver 170 is implemented, and/or radio frequency noise picked up by the pre-amplifier input nodes acting as antennas.

Also, as post-amplifier 350 generates a subtraction of the voltage levels on the two input signals, post-amplifier 350 may be termed as a difference circuit. Here, the amplification and subtraction operations are combined using a single circuit. However, other types of difference circuits may be implemented without departing from the scope and spirit of the present invention as will be apparent to one skilled in the relevant arts based on the disclosure herein.

Examination block 390 receives the amplified output voltage and determines the symbol values represented by the voltage levels. In one embodiment, each symbol may be in one of two states (i.e., represent a binary number), and accordingly a comparator may be used to in examination block 390 to determine whether the amplified signal at a given point in time represents a zero or a one.

The components depicted in Figure 3A are merely examples. For example, receiver 170 may contain more amplification stages than that shown in Figure 3A. In one embodiment, signals are amplified until the eventual output has a voltage of about 5V. Also, several modifications may be made to the diagram without departing from the scope and spirit of the present invention, as will be apparent to one skilled in the relevant arts. Such modifications are also contemplated to be within the scope and spirit of the present invention.

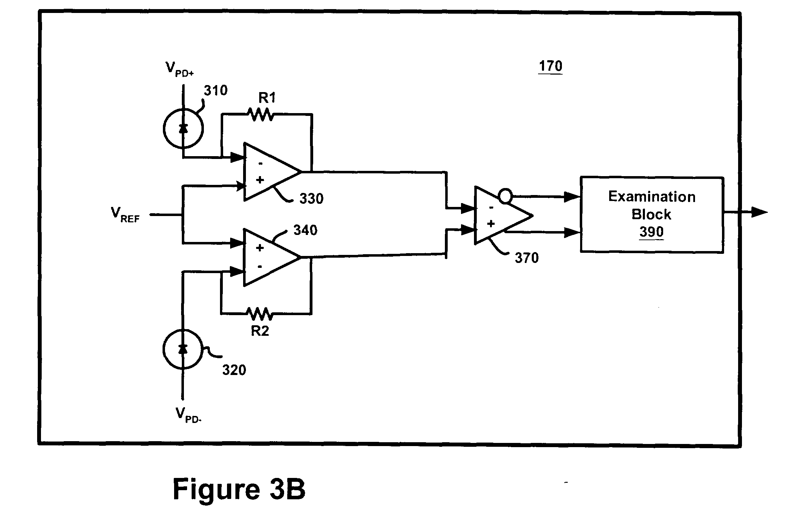

For example, Figure 3B depicts an alternative embodiment in which post-amplifier 350 may be replaced by differential amplifier 360. The remaining components may remain substantially the same, and accordingly the same label and reference numeral are used for similar components. Only the differences between the embodiments of Figures 3A and 3B are described here for conciseness.

Differential amplifier 360 is also responsive to the voltage difference between the positive and negative input terminals, and generates two amplified outputs. The two outputs may have the same magnitude, but different signs. The positive voltage may be generated on output 361 and the negative voltage may be generated on output 362. Either or both of the outputs may be used by examination block 390 in recovering the symbol values. The amplifiers of Figures 3A and 3B may be implemented in a known way. Thus, the information encoded in a infrared signal can be recovered in accordance with the present invention.

In addition, even though the embodiments of Figures 3A and 3B are described as using a single pair of amplifiers 330 and 340, and a corresponding difference circuit, it should be noted that multiple pairs of amplifiers (not shown) may be employed for a higher overall gain. In such an embodiment, a difference circuit is employed for each pair of amplifiers, and a summing amplifier (not shown) may be employed to add the outputs of the difference circuits. As a result, a proportionately higher gain may be attained. The output of the summing amplifier may be examined by an examination block to recover the encoded data.

### 5. Conclusion

While various embodiments of the present invention have been described above, it should be understood that they have been presented by way of example only, and not limitation. Thus, the breadth and scope of the present invention should not be limited by any of the above-described exemplary embodiments, but should be defined only in accordance with the following claims and their equivalents.

## Claims

1. A receiver for recovering the information in a signal, said receiver comprising:
a pair of light sensitive devices biased by voltages having opposite polarities, each of said light sensitive devices generating an electrical signal proportionate to the strength of said signal; and
a difference circuit generating a difference signal by subtracting one of said electrical signals from the other,
wherein the subtraction reduces any common noise in said electrical signals, and
wherein biasing by voltages having opposite polarities causes the magnitudes of the strength of the electrical signals to be added when the two electrical signals are subtracted.

2. The receiver of claim 1, further comprising a plurality of pairs of light sensitive devices and corresponding number of difference circuits, wherein each pair of light sensitive devices is biased by voltage signals of opposite polarities, wherein each difference circuit generates a corresponding difference signal by subtracting electrical signals generated by a corresponding pair of light sensitive devices, said receiver further comprising a summing amplifier to add the outputs of said difference circuits.

3. The receiver of claim 1, further comprising:
a first amplifier to amplify said electrical signal generated by a first one of said pair of light sensitive devices; and
a second amplifier to amplify said electrical signal generated by a second one of said pair of light sensitive devices,
wherein said difference circuit is coupled to the outputs of said first amplifier and said second amplifier, said difference circuit generating said difference signal by subtracting said electrical signals in amplified form.

4. The receiver of claim 3, wherein said first amplifier, said second amplifier and said pair of light sensitive devices are provided as one integrated circuit.

5. The receiver of claim 1, wherein said signal comprises an infrared signal.

6. The receiver of claim 1, wherein said difference circuit comprises an amplifier.

7. The receiver of claim 6, wherein said amplifier comprises a differential amplifier.

8. The receiver of claim 1, wherein said electrical signal comprises current, and wherein each of said light sensitive devices is designed to generate current proportionate to the strength of said signal.

9. The receiver of claim 1, further comprising an examination block for recovering the information by examining the output of said difference circuit.

10. The receiver of claim 1, wherein each of said light sensitive devices comprises a photodiode or a transistor photo-detector.

11. A system for recovering the symbols encoded in a signal, said system comprising:
a receiver recovering the data in said signal, said receiver comprising:
a pair of light sensitive devices biased by voltages having opposite polarities, each of said light sensitive devices generating an electrical signal proportionate to the strength of said signal; and
a difference circuit generating a difference signal by subtracting one of said electrical signals from the other,
wherein the subtraction reduces any common noise in said difference signal, and
wherein biasing by voltages having opposite polarities causes the magnitudes of the strength of the electrical signals to be added when the two electrical signals are subtracted; and
an examination block for recovering said symbols by examining the output of said difference circuit.

12. The system of claim 11, further comprising:
a first amplifier to amplify said electrical signal generated by a first one of said pair of light sensitive devices; and
a second amplifier to amplify said electrical signal generated by a second one of said pair of light sensitive devices,
wherein said difference circuit is coupled to the outputs of said first amplifier and said second amplifier, said difference circuit generating said difference signal by subtracting said electrical signals in amplified form.

13. The system of claim 11, wherein said signal comprises an infrared signal and wherein each of said light sensitive devices comprises a photodiode or a transistor photo-detector.

14. The system of claim 11, wherein said difference circuit comprises an amplifier.

15. The system of claim 14, wherein said amplifier comprises a differential amplifier.

16. A receiver for recovering the information in a signal, said receiver comprising:
a pair of light sensitive devices biased by voltages having opposite polarities, each of said light sensitive devices generating an electrical signal proportionate to the strength of said signal; and
a first amplifier generating a difference signal by subtracting one of said electrical signals from the other,
wherein the subtraction reduces any common noise in said electrical signals, and
wherein biasing by voltages having opposite polarities causes the magnitudes of the strength of the electrical signals to be added when the two electrical signals are subtracted.

17. The receiver of claim 16, further comprising:
a second amplifier to amplify said electrical signal generated by a first one of said pair of light sensitive devices; and
a third amplifier to amplify said electrical signal generated by a second one of said pair of light sensitive devices,
wherein said first amplifier is coupled to the outputs of said second amplifier and said third amplifier, said first amplifier generating said difference signal by subtracting said electrical signals in amplified form.

18. The receiver of claim 16, further comprising a plurality of pairs of light sensitive devices and corresponding number of difference circuits, wherein each pair of light sensitive devices is biased by voltage signals of opposite polarities, wherein each difference circuit generates a corresponding difference signal by subtracting electrical signals generated by a corresponding pair of light sensitive devices, said receiver further comprising a summing amplifier to add the outputs of said difference circuits.

19. A method of recovering the information in a signal, said method comprising:
biasing a pair of light sensitive devices using voltages with opposite polarities, each of said light sensitive devices generating an electrical signal proportionate to the strength of said signal;
generating a difference signal by subtracting one of said electrical signals from the other,
wherein the subtraction reduces any common noise in said difference signal, and
wherein biasing in opposite directions of said light sensitive devices causes the magnitudes of the electrical signals to be added when the two electrical signals are subtracted.

20. The method of claim 19, further comprising amplifying each of said electrical signals to generate a corresponding amplified signal, wherein said amplified signals are subtracted to generated said difference signal.

21. The method of claim 20, wherein said signal comprises infrared signals with symbols encoded at a high rate.
